Europäisches Patentamt

European Patent Office

Office européen des brevets

(11) Publication number: **0 639 614 A1**

## EUROPEAN PATENT APPLICATION

(21) Application number: **94112113.9**

(22) Date of filing: **03.08.94**

(51) Int. Cl.6: **C08K 7/24**, C08J 9/32

(30) Priority: **16.08.93 US 107389**
**07.12.93 US 163057**

(43) Date of publication of application:
**22.02.95 Bulletin 95/08**

(84) Designated Contracting States:
**BE DE ES FR GB IT NL SE**

(71) Applicant: **MILES INC.**
**One Mellon Center**
**500 Grant St.**
**Pittsburgh, PA 15219-2502 (US)**

(72) Inventor: **Lee, Bin**
**211 Windsor Drive**
**Coraopolis, PA 15108 (US)**

(74) Representative: **Weber, Gerhard, Dr.**
**c/o BAYER AG,**
**Konzernverwaltung RP,**
**Patente Konzern**
**D-51368 Leverkusen (DE)**

(54) **Process for the production of reinforced moldings and the resultant products.**

(57) The present invention relates to a reaction injection molding process for preparing a molded product by reaction of a mixture of

(a) an organic polyisocyanate;

(b) one or more compounds containing at least two isocyanate-reactive groups;

(c) about 0.5 to about 40% by weight, based on the weight of the molded product, of rigid microspheres, preferably in admixture with component (b);

and, optionally,

(d) an inert gas dissolved in at least one of components (a) or (b) in an amount sufficient to produce a molded product having a density that is at least 1% less than the density of an analogous molded product without an inert gas but which is at least 0.75 g/cm$^3$; and

(e) up to 45% by weight, based upon the weight of the molded product, of a reinforcing filler.

EP 0 639 614 A1

This application is a Continuation-In-Part of Application Serial No. 08/107,389, filed August 16, 1993.

BACKGROUND OF THE INVENTION

A variety of different molded polyurethane parts can be produced by the reaction injection molding ("RIM") process. This process involves filling a closed mold with highly reactive liquid starting components within a very short time, generally by using high output, high pressure dosing apparatus after the components have been mixed. The RIM process has become an important process for the production of external automotive body parts and other types of molded products. The RIM process involves the intimate mixing of a polyisocyanate component and an isocyanate-reactive component, followed by the injection of this mixture into a mold for subsequent rapid curing. The polyisocyanate component is typically based on a liquid polyisocyanate. The isocyanate-reactive component contains a high molecular weight isocyanate-reactive component, typically a polyol and/or an amine polyether, and usually contains a chain extender containing amino and/or hydroxyl groups. U.S. Patent 4,218,543 describes a RIM process currently being commercially used on a large scale. U.S. Patents 4,433,067, 4,444,910, 4,530,941, 4,774,263, and 4,774,264 describe reaction injection molding processes for the production of polyurethane(urea) elastomers. As used herein, the term "polyurethanes" includes polyurethanes, polyureas, and polyurethane polyureas.

Expanded microspheres consisting of a synthetic thermoplastic resin shell that encapsulates a liquid blowing agent are known. See, e.g., U.S. Patents 4,829,094, 4,843,104, and 4,902,722. Such microspheres have been suggested for use in plastics, coatings, and adhesives, and are described as having the ability to reduce density, to lower volume costs, to improve impact resistance, and to reduce shrinkage (see "Dualite" product information bulletin). In addition, such microspheres have been described as useful in low density rapid setting polyurethanes (see U. S. Patent 4,038,238) and in non-polyurethane-based reaction injection molded polymers (see, e.g., U.S. Patent 4,959,395). Finally, unexpanded microspheres have been described for use in polyurethane RIM. See Japanese Patent Publication 60-244511.

The known uses of microspheres, however, are still attended by various disadvantages, such as poor mold release. Therefore, it was an object to the present invention to prepare readily released urethane addition products by the RIM process using isocyanate-reactive components containing microspheres different from those already known.

It has now been found that the use of the rigid microspheres in the RIM process improves the release of molded parts from the mold, while also providing improved nucleation density and enhanced flow of the isocyanate-reactive component during the molding process.

For the preferred embodiments in which an inert gas is dissolved in the isocyanate-reactive component, the addition of rigid microspheres allows a substantial increase in the amount of inert gas that can be dissolved and thus provides a significant reduction in density for the molded parts without adversely affecting physical properties or demold characteristics.

SUMMARY OF THE INVENTION

The present invention relates to a reaction injection molding process for preparing a molded product comprising reacting a mixture of

(a) an organic polyisocyanate;

(b) one or more compounds containing at least two isocyanate-reactive groups; and

(c) about 0.5 to about 40% by weight (preferably 2 to 10% by weight), based on the weight of the molded product, of rigid microspheres (preferably rigid inorganic microspheres), preferably in admixture with component (b).

The present invention preferably relates to a reaction injection molding process according to the invention in which the reaction mixture additionally comprises

(d) an inert gas (preferably air and/or nitrogen gas) dissolved in at least one of components (a) or (b) in an amount sufficient to produce a molded product having a density that is at least 1% (preferably at least 5%) less than the density of an analogous molded product without an inert gas but which is at least 0.75 $g/cm^3$ (preferably 0.85 to 1.1 $g/cm^3$); and

(e) up to 45% by weight (preferably from 5 to 45% by weight and most preferably from 15 to 40% by weight), based upon the weight of the molded product, of a reinforcing filler other than a rigid microsphere.

DESCRIPTION OF THE INVENTION

Suitable rigid microspheres for use as component (c) according to the present invention can be hollow microspheres (also known as microballoons or microbubbles) or solid microspheres. When preparing low-density materials, for example, hollow spheres are generally preferred. However, regardless of whether the microspheres are hollow or solid, they should be heat resistant and essentially incompressible when subjected to elevated temperatures and pressure during the molding process. In a typical RIM process, compression strengths greater than about 12 MPa•s (preferably greater than 20 MPa•s) are generally suitable. With hollow microspheres, wall thickness is, of course, a selection factor.

Suitably rigid microspheres may be made of inorganic materials, such as glass, ceramic, and carbon, or rigid organic polymers, such as phenolic resins. Solid microspheres can be prepared by any of several methods known in the art. For example, solid microspheres can be prepared by softening irregularly shaped particles just enough for then to flow into spheres under the influence of surface tension, by quenching a melt in a cooler medium, or by carrying out polymerizations in well-stirred suspensions at elevated temperatures.

Hollow inorganic microspheres can be prepared by several known methods. For example, hollow glass spheres can be prepared by grinding and sizing soda-lime glass cullet to form particles that, in combination with blowing agents, are passed through a gas flame (ca. 1000°C) to soften the glass and generates gases that expand the particles. See U.S. Patent 3,365,315. Hollow glass spheres can also be prepared by spray-drying a sodium borosilicate solution containing a blowing agent to form a particulate material that is passed through a gas flame to form the spheres. See U.S. Patent 2,978,339. Ceramic microspheres can be obtained as both solid and hollow microspheres as a normal aluminosilicate by-product of burning coal. In general, hollow ceramic microspheres are heavier than similarly sized glass microspheres. Although inorganic microspheres can be treated with a silane or titanate coupling agent to enhance adhesion with the matrix urethane polymer, the untreated particles generally exhibit sufficient adhesion to the polymer, making such treatments unnecessary.

Commercially available hollow inorganic microspheres include ceramic Z-Light Spheres and glass Scotchlite K46 Glass Bubbles from 3M Company. Commercially available glass microspheres typically contain about 72 wt.% $SiO_2$, 14 wt.% $Na_2O$, 10 wt.% CaO, 3 wt.% MgO, and 1 wt.% $Al_2O_3/K_2O/Li_2O$, whereas commercially available ceramic microspheres typically contain about 50-58 wt.% $SiO_2$, 25-30 wt.% $Al_2O_3$, 6-10 wt.% CaO, 1-4 wt.% $Na_2O/K_2O$, and 1-5 wt.% other oxides. E.g., J.F. Plummer, "Microspheres" in Encyclopedia of Polymer Science and Technology, Vol. 9 (John Wiley & Sons, Inc., 1987), page 788.

Solid microspheres of organic polymers can be prepared using aqueous dispersions of suitable film-forming thermoset or thermoplastic materials. In the presence of a blowing agent, this method gives hollow microspheres.

It is typical of available rigid microspheres that a given sample contains a range of sizes. Suitable microspheres for the present invention typically have a diameter of between about 1 and about 350 $\mu$m (preferably 10 to 210 $\mu$m). The specific size range, however, is often dependent on the selection of particular injection equipment and operating parameters (for example, nozzle diameter).

Low density (especially hollow) microspheres are preferred, with those having densities ranging from 0.05 to 2.5 g/cm$^3$ being particularly preferred.

The rigid microspheres can be added to either the isocyanate component or the isocyanate-reactive component, although addition to isocyanate-reactive component (b) is preferred. The microspheres are added in amounts such that the final products have a total microsphere content of from about 0.5 to about 40% (preferably 2 to 10%) by weight. Products having density reductions in the range from 10 to 30% are readily obtained.

Although less preferred, it is also possible to include known compressible expanded microspheres, such as those described in U.S. Patents 4,829,094, 4,843,104, 4,902,722 and 4,959,395, but the amount of such microspheres should not exceed 50% by weight of the amount of the rigid microspheres. Commercially available compressible microspheres include Dualite M6017AE, Dualite M6001AE, and Dualite M6029AE, all available from Pierce & Stevens Corporation, and Expancel available from Nobel Industries. These commercially available compressible microspheres are expanded, hollow microspheres consisting of a thin shell of a vinylidene chloride, polypropylene, or acrylonitrile copolymer. The interior of the Dualite and Expancel microspheres contains a volatile liquid, such as a low-boiling hydrocarbon (which is pentane for Dualite microspheres and isobutane for Expancel microspheres), which is used to expand the microsphere and remains inside the shell thereafter. An organic or inorganic material that decomposes upon only moderate heating will also serve to expand the microsphere, with the decomposition products remaining in the shell thereafter. Also present on the outside of Dualite microspheres is a rough coating of calcium carbonate dust.

Suitable polyisocyanates for use as component (a) according to the present invention include aliphatic, cycloaliphatic, araliphatic, aromatic and heterocyclic polyisocyanates which are known and described, for example, by W. Siefken in Justus Liebigs Annalen der Chemie, 562, pages 75-136. Specific examples include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate and mixtures thereof; 1-isocyanato-3,3,5-trimethyl-5-isocyanatomethylcyclohexane (isophorone diisocyanate or IPDI); 2,4- and 2,6-hexahydrotoluene diisocyanate and mixtures thereof; hexahydro-1,3- and/or -1,4-phenylene diisocyanate; perhydro-2,4'- and/or -4,4'-diphenylmethane diisocyanate; 1,3- and 1,4-phenylene diisocyanate; 2,4- and 2,6-toluene diisocyanate and mixtures thereof; diphenylmethane 2,4'- and/or 4,4'-diisocyanate; naphthylene 1,5-diisocyanate; triphenylmethane-4,4',4''-triisocyanate; and polyphenyl polymethylene polyisocyanates of the type obtained by condensing aniline with formaldehyde, followed by condensation.

It is preferred to use the readily available polyisocyanates such as 2,4- and 2,6-toluene diisocyanate and mixtures of such isomers; polyphenyl polymethylene polyisocyanates of the type obtained by condensing aniline with formaldehyde, followed by phosgenation; and polyisocyanates containing carbodiimide groups, urethane groups, allophanate groups, isocyanurate groups, urea groups, or biuret groups. Particularly preferred are the liquid derivatives of 4,4'-diphenylmethane diisocyanate (MDI) which may be liquefied by introducing carbodiimide groups, blending with 2,4'-diphenylmethane diisocyanate or by introducing urethane groups. Especially preferred are the liquefied derivatives of MDI prepared by reacting MDI with 0.1 to 0.3 mols of a polypropylene glycol having a molecular weight of up to about 700, in particular, dipropylene glycol, tripropylene glycol or mixtures thereof as disclosed, for example, in U.S. Patent 3,644,457.

Also suitable for use as polyisocyanate component (a) are isocyanate-terminated prepolymers based on the above-mentioned polyisocyanates and the isocyanate-reactive compounds, preferably hydroxyl compounds, disclosed hereinafter for use in accordance with the present invention. Prepolymers of this type are disclosed in U.S. Patent 4,374,210. The prepolymers are preferably based on the polyether or polyester polyols disclosed hereinafter and, optionally, the low molecular weight, hydroxyl group-containing chain extenders which are also disclosed hereinafter. Blends of any of the previously disclosed polyisocyanates may also be used in accordance with the present invention.

Suitable reactants for preparing the products of the present invention include compounds (b) containing at least two isocyanate-reactive groups. These compounds may be divided into two groups, high molecular weight compounds having molecular weights of from 400 to about 10,000 and low molecular weight compounds (i.e., chain extenders), having molecular weights of from 62 to 399. Examples of suitable high molecular weight compounds include the polyesters, polyethers, polythioethers, polyacetals and polycarbonates containing at least 2, preferably 2 to 8 and most preferably 2 to 4 isocyanate-reactive groups of the type known for the production of polyurethanes.

The high molecular weight polyethers suitable for use in accordance with the invention are known and may be obtained, for example, by polymerizing epoxides such as ethylene oxide, propylene oxide, butylene oxide, tetrahydrofuran, styrene oxide, or epichlorohydrin in the presence of $BF_3$ or by chemically adding these epoxides, preferably ethylene oxide and propylene oxide, in admixture or successively to components containing reactive hydrogen atoms such as water, alcohols, or amines. Examples of alcohols and amines include the low molecular weight chain extenders set forth hereinafter, 4,4'-dihydroxydiphenylpropane, sucrose, aniline, ammonia, ethanolamine, and ethylene diamine. It is preferred to use polyethers which contain substantial amounts of primary hydroxyl groups in terminal positions (up to 90% by weight, based on all of the terminal hydroxyl groups present in the polyether). Polyethers modified by vinyl polymers, of the type formed, for example, by polymerizing styrene or acrylonitrile in the presence of polyether (U.S. Patents 3,383,351, 3,304,273, 3,523,093, and 3,110,695; and German Patent 1,152,536), are also suitable, as are polybutadienes containing OH groups.

In addition, polyether polyols which contain high molecular weight polyadducts or polycondensates in finely dispersed form or in solution may be used. Such modified polyether polyols are obtained when polyaddition reactions (e.g., reactions between polyisocyanates and amino functional compounds) or polycondensation reactions (e.g., between formaldehyde and phenols and/or amines) are directly carried out in situ in the polyether polyols.

Suitable examples of high molecular weight polyesters include the reaction products of polyhydric, preferably dihydric alcohols (optionally in the presence of trihydric alcohols), with polyvalent (preferably divalent) carboxylic acids. Instead of using the free carboxylic acids, it is also possible to use corresponding polycarboxylic acid anhydrides or corresponding polycarboxylic acid esters of lower alcohols or mixtures

4

thereof for producing the polyesters. The polycarboxylic acids may be aliphatic, cycloaliphatic, aromatic, and/or heterocyclic and may be unsaturated or substituted (for example, by halogen atoms). The polycarboxylic acids and polyols used to prepare the polyesters are known and described, for example, in U.S. Patents 4,098,731 and 3,726,952, herein incorporated by reference in their entirety. Suitable polythioethers, polyacetals, polycarbonates, and other polyhydroxyl compounds are also disclosed in the above-identified U.S. patents. Finally, representatives of the many and varied compounds which may be used in accordance with the invention may be found for example in High Polymers, Volume XVI, "Polyurethanes, Chemistry and Technology," by Saunders and Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Höchtlen, Carl Hanser Verlag, Munich, 1966, pages 45-71.

Suitable aminopolyethers which may be used in accordance with the present invention as high molecular weight compounds (the molecular weight always being the average molecular weight which may be calculated from the functionality and the content of isocyanate-reactive groups) are those wherein at least about 30 and preferably about 60 to 100 equivalent percent of the isocyanate-reactive groups are primary and/or secondary (preferably primary) aromatically or aliphatically (preferably aromatically) bound amino groups and the remainder are primary and/or secondary aliphatically bound hydroxyl groups.

In these compounds, the terminal residues carrying the amino groups may also be attached to the polyether chain by urethane or ester groups. These "aminopolyethers" are prepared by known methods. For example, polyhydroxypolyethers such as polypropylene glycol ethers may be aminated by reaction with ammonia in the presence of Raney nickel and hydrogen (Belgian Patent 634,741). U.S. Patent 3,654,370 describes the production of polyoxyalkylene polyamines by reaction of the corresponding polyol with ammonia and hydrogen in the presence of a nickel, copper, or chromium catalyst. German Patent 1,193,671 describes the production of polyethers containing terminal amino groups by hydrogenation of cyanoethylated polyoxypropylene ethers. Other methods for the production of polyoxyalkylene (polyether) amines are described in U.S. Patents 3,155,728 and 3,236,895 and in French Patent 1,551,605. The production of polyethers containing terminal secondary amino groups is described, for example, in French Patent 1,466,708.

Polyhydroxypolyethers of relatively high molecular weight may be converted into the corresponding anthranilic acid esters by reaction with isatoic acid anhydride, as described, for example, in German Offenlegungsschriften 2,019,432 and 2,619,840 and in U.S. Patents 3,808,250, 3,975,428, and 4,016,143. Polyethers containing terminal aromatic amino groups are formed in this way.

According to German Offenlegungsschrift 2,546,536 and U.S. Patent 3,865,791, relatively high molecular weight compounds containing terminal amino groups are obtained by reaction of NCO prepolymers based on polyhydroxypolyethers with enamines, aldimines, or ketimines containing hydroxyl groups and subsequent hydrolysis.

It is preferred to use amino polyethers obtained by hydrolysis of compounds containing terminal isocyanate groups, for example, in accordance with German Offenlegungsschrift 2,948,419 or U.S. Patent 4,515,923, herein incorporated by reference in its entirety. In this process, polyethers most preferably containing 2 to 4 hydroxyl groups are allowed to react with polyisocyanates to form NCO prepolymers and, in a second step, the isocyanate groups are converted by hydrolysis into amino groups.

The aminopolyethers used in accordance with the invention are often mixtures of the compounds mentioned by way of example and (on a statistical average) most preferably contain 2 to 4 terminal isocyanate-reactive groups. In the process according to the invention, the aminopolyethers may be used in admixture with polyhydroxypolyethers free from amino groups.

In accordance with the present invention, the high molecular weight compounds are used in admixture with up to about 95% by weight (preferably up to about 50% by weight, more preferably about 8 to 30% by weight, and most preferably about 12 to 26% by weight), based on the total quantity of the high molecular weight compounds, of the low molecular weight chain extenders. Examples of suitable hydroxyl group-containing chain extenders include ethylene glycol, 1,2- and 1,3-propanediol, 1,3- and 1,4- and 2,3-butanediol, 1,6-hexanediol, 1,10-decanediol, diethylene glycol, triethylene glycol, tetraethylene glycol, dipropylene glycol, tripropylene glycol, glycerol, and trimethylolpropane.

Other suitable chain extenders include aromatic polyamines (preferably diamines) having molecular weights of less than 400, especially the sterically hindered aromatic polyamines (preferably diamines) having molecular weights of less than 400, especially the sterically hindered aromatic diamines which contain at least one linear or branched alkyl substituent in the ortho-position to the first amino group and at least one (preferably two) linear or branched alkyl substituents containing from 1 to 4 (preferably 1 to 3) carbon atoms in the ortho-position to a second amino group. These aromatic diamines include 1-methyl-3,5-diethyl-2,4-diaminobenzene, 1-methyl-3,5-diethyl-2,6-diaminobenzene, 1,3,5-trimethyl-2,4-diaminobenzene, 1,3,5-triethyl-2,4-diaminobenzene, 3,5,3',5'-tetraethyl-4,4'-diaminodiphenylmethane, 3,5,3',5'-tetraisopropyl-4,4'-diaminodiphenylmethane, 3,5-diethyl-3',5'-diisopropyl-4,4'-diaminodiphenylmethane, 3,5-diethyl-5,5'-diisopropyl-4,4'-diaminodiphenylmethane, 1-methyl-2,6-diamino-3-isopropylbenzene, and mixtures of the above diamines. Most preferred are mixtures of 1-methyl-3,5-diethyl-2,4-diaminobenzene and 1-methyl-3,5-diethyl-2,6-diaminobenzene in a weight ratio between about 50:50 to 85:15 (preferably about 65:35 to 80:20).

In addition, aromatic polyamines may be used in admixture with the sterically hindered chain extenders and include, for example, 2,4- and 2,6-diaminotoluene, 2,4'- and/or 4,4'-diaminodiphenylmethane, 1,2- and 1,4-phenylenediamine, naphthalene-1,5-diamine and triphenylmethane-4,4',4''-triamine. The difunctional and polyfunctional aromatic amine compounds may also exclusively or partly contain secondary amino groups such as 4,4'-di(methylamino)diphenylmethane or 1-methyl-2-methylamino-4-aminobenzene. Liquid mixtures of polyphenyl polymethylene-polyamines, of the type obtained by condensing aniline with formaldehyde, are also suitable. Generally, the nonsterically hindered aromatic diamines and polyamines are too reactive to provide sufficient processing time in a RIM system. Accordingly, these diamines and polyamines should generally be used in combination with one or more of the previously mentioned sterically hindered diamines or hydroxyl group-containing chain extenders.

In a preferred embodiment of the invention, which is particularly suitable for preparing low-density products, an inert gas (d) is introduced into one or more of the reactive components (preferably into component (b)) using techniques known in the art. As used herein, the term "inert gas" refers to gaseous materials that are essentially unreactive under the conditions used in the process of the invention. Examples of suitable inert gases include air, nitrogen, argon, carbon dioxide, or mixtures thereof.

When preparing the preferred low density products, the inert gas is introduced in sufficient quantity to give products having a density that is at least 1% (preferably at least 5%) less than the density of an analogous molded product not containing an inert gas but which is at least 0.75 g/cm$^3$ (preferably ranging from 0.85 to 1.1 g/cm$^3$).

The inert gas is preferably introduced using commercial equipment, such as Diffuser Stone-KIMEX mixers and venturi type mixers. The presently preferred device is a Hennecke Aeromat-GU which is described in Hennecke Trade Bulletin # 41 and in a 1991 article entitled "Consistent Distribution of Finely Dispersed Gases in Polyol Streams", Proksa et al, in Polyurethanes World Congress 1991. Sufficient inert gas is customarily introduced into the system in an amount in excess of the amount necessary to saturate the particular component at a feed tank pressure of from about 0.21 to about 0.35 N/mm$^2$. As is known in the art, material flows from the feed tank through a transfer pump (which increases the pressure of the particular component) through a metering pump to the mixhead. Discharge pressures of the transfer pump are generally in the range of 0.35 to 0.7 N/mm$^2$, while discharge pressures of the metering pump are generally in the range of 14 to 21 N/mm$^2$. The amount of the gas in the system is generally monitored using commercial measuring equipment which responds to changes in specific gravity of the liquid components. One such device is the Dynatrol (manufactured by Automation Products), which permits the effective control of the gas content by monitoring any changes in the specific gravity of the liquid component.

When preparing low density products, factors that are important to achieving high quality low density product include enhanced flow characteristics and reduced nucleation density of the isocyanate-reactive component. Good flow properties are important because relatively smaller quantities of reactive materials are required for low density products. Reduced nucleation density is directly related to an increased amount of inert gas dissolved or dispersed in the isocyanate-reactive component and ultimately to a lower density product. The use of rigid microspheres according to the present invention has been found to be particularly useful in enhancing both the flow characteristics and the nucleation density of the isocyanate-reactive component, as well as reducing the time required to achieve a given nucleation density. As a result, a significant reduction in density for the molded parts is achieved while at the same time improving demold characteristics (such as mold release, green strength, and hot tear strength) without adversely affecting physical properties. In fact, impact resistance is consistently improved. The use of hollow rather than solid microspheres provides an even further reduction in density, while still providing improved physical properties and demold characteristics, and is thus particularly preferred.

Reinforcing fillers (e), which allow reduced contraction of the molded product upon cooling, as well as adjustment of tensile modulus and flex modulus, are well known in the art. Suitable inorganic fillers include glass in the form of fibers or flakes, mica, wollastonite, carbon black, talc, calcium carbonate, and carbon fibers. Organic fillers, although less preferred, are also suitable.

Other additives which may be used in the present invention include catalysts, especially tin(II) salts of carboxylic acids, dialkyltin salts of carboxylic acids, dialkyltin mercaptides, dialkyltin dithioesters, and

6

tertiary amines. Preferred among these catalysts are dibutyltin dilaurate and 1,4-diazabicyclo[2,2,2]octane (triethylene diamine), especially mixtures of these catalysts. The catalysts are generally used in amounts of about 0.01 to 10% (preferably about 0.05 to 2%), based on the weight of the high molecular weight component.

It is also possible to use surface-active additives such as emulsifiers and foam stabilizers. Examples include siloxanes, N-stearly-N',N'-bis-hydroxyethyl urea, oleyl polyoxyethylene amide, stearyl diethanol amide, isostearyl diethanolamide, polyoxyethylene glycol monoleate, a pentaerythritol/adipic acid/oleic acid ester, a hydroxyethyl imidazole derivative of oleic acid, N-stearyl propylene diamine, and the sodium salts of castor oil sulfonates or of fatty acids. Alkali metal or ammonium salts of sulfonic acid, such as dodecylbenzenesulfonic acid or dinaphthylmethanesulfonic acid, and fatty acids may also be used as surface-active additives. Particularly suitable surface-active compounds include polyether siloxanes of the type generally known for use in the polyurethane art, such as water-soluble polyether siloxanes. The structure of these siloxanes is generally such that a copolymer of ethylene oxide and propylene oxide is attached to a polydimethylsiloxane functionality. Methods of manufacturing preferred siloxanes are described in U.S. Patent 4,906,721, the disclosure of which is herein incorporated by reference.

It is also possible to use mold release agents, which are compounds that are added to the reactive components of the isocyanate addition reaction, usually the isocyanate-reactive component, to assist in the removal of a polyurethane product from a mold. Suitable mold release agents for the present invention include those based at least in part on fatty acid esters (e.g., U.S. Patents 3,726,952, 3,925,527, 4,058,492, 4,098,731, 4,201,847, 4,254,228, 4,868,224, and 4,954,537 and British Patent 1,365,215); metal and/or amine salts of carboxylic acids, amido carboxylic acids, phosphorus-containing acids, or boron-containing acids (e.g., U.S. Patents 4,519,965, 4,581,386, 4,585,803, 4,876,019, 4,895,879, and 5,135,962); polysiloxanes (e.g., U.S. Patent 4,504,313); amidines (e.g., U.S. Patents 4,764,540, 4,789,688, and 4,847,307); resins prepared by the reaction of isocyanate prepolymers and a polyamine-polyimine component (e.g., U.S. Patent 5,198,508); and neutralized esters prepared from certain amine-started tetrahydroxy compounds described in U.S. Patent 5,208,268. Particularly preferred mold release agents contain zinc stearate.

In addition to the reinforcement fillers, catalysts, surface-active agents, and mold release agents mentioned above, other additives which may be used in the molding compositions of the present invention include known fillers of other types, blowing agents, cell regulators, flame retarding agents, plasticizers, and dyes of the types generally known in the art.

The compositions according to the present invention are especially suited for processing by the RIM process. In general, two separate streams are intimately mixed and subsequently injected into a suitable mold, although it is possible to use more than two streams. The first stream contains the polyisocyanate component, whereas the second stream contains the isocyanate-reactive component, chain extender, any internal mold release agent, and any other additives which are to be included.

The quantity of polyisocyanate used in the process according to the present invention is preferably calculated so that the foamable mixture has an isocyanate index of from 70 to 130 (preferably from 90 to 110). By "isocyanate index" is meant the quotient of the number of isocyanate groups and number of groups which are reactive with isocyanates, multiplied by 100.

The known RIM process is used for carrying out the process according to the present invention. In general, the components may be mixed simultaneously, or the non-reactive components may be pre-mixed and then mixed with the reactive components. A starting temperature of from 10°C to 70°C (preferably from 30°C to 50°C) is generally chosen for the mixture introduced into the mold. The temperature of the mold itself is generally from 40°C to 100°C (preferably from 50°C to 70°C). After completion of the reaction and molding process, the resultant product is removed from the mold.

The process of the invention is characterized by improved mold release, which permits less frequent use of mold release agents (particularly external mold release agents) and less frequent cleaning of product residues and/or fragments from the molds or aftermixers.

Although expanded polymeric microspheres, such as Dualite microspheres, are suitable for use in combination with the rigid microspheres of the invention, such polymeric microspheres, when used alone, provide generally inferior processing characteristics when compared with the rigid microspheres of the present invention. For example, Z-Light Spheres are hard microspheres having excellent dimensional stability, even when heated well above room temperature during RIM processing. Processing is generally facile because the viscosity of the isocyanate-reactive component increases only slightly, green strength of the molded product is good, and mold release is improved. In contrast, Dualite microspheres, although providing adequate density reduction, are soft and have generally inferior dimensional stability that is highly dependent on processing conditions. Processing is more difficult than with rigid microspheres because of significantly increased viscosity, low green strength, and poorer mold release even in comparison to compositions containing no microspheres.

The moldings obtainable by the process according to the present invention are particularly suitable for the manufacture of a variety of polyurethane products. For example, in a preferred embodiment of the invention, low density products such as flexible car bumpers and car body elements can be produced. With suitable variation of the starting components, particularly by using a relatively low proportion of the active diamine, it is also possible to produce materials which have good abrasion resistance and high mechanical strength, such as flexible polyurethane shoe soles.

The following examples further illustrate details for the process of this invention. The invention, which is set forth in the foregoing disclosure, is not to be limited either in spirit or scope by these examples. Those skilled in the art will readily understand that known variations of the conditions of the following procedures can be used. Unless otherwise noted, all temperatures are degrees Celsius and all parts and percentages are parts by weight and percentages by weight, respectively.

EXAMPLES

The following microspheres and fillers were used in the Examples:

Microspheres:

(M1) Hollow ceramic microspheres having a size distribution of about 10-150 $\mu$m and a density of 0.7 g/cm$^3$ (available as Z-Light Spheres W1000 from 3M Company)
(M2) Hollow ceramic microspheres having a size distribution of about 10-125 $\mu$m and a density of 0.7 g/cm$^3$ (available as Z-Light Spheres W1012 from 3M Company)
(M3) Hollow ceramic microspheres having a size distribution of about 10-210 $\mu$m and a density of 0.7 g/cm$^3$ (available as Z-Light Spheres W1200 from 3M Company)
(M4) Hollow glass microspheres having a size distribution of about 10-150 $\mu$m and a density of 0.46 g/cm$^3$ (available as Scotchlite Glass Bubbles K46 from 3M Company)
(MC) Hollow expanded polymeric microspheres having a size distribution of about 10-150 $\mu$m and a density of 0.13 g/cm$^3$ (available as Dualite M6017AE from Pierce & Stevens Corporation)

Fillers:

(F1) Milled glass fiber having a length of 200 $\mu$m and diameter of 16 $\mu$m (for an aspect ratio of 12.5) and a density of 2.6 g/cm$^3$ (available as OCF737BD from Owens Corning)
(F2) Wollastonite fiber having a length of 70 $\mu$m and diameter of 4.5 $\mu$m (for an aspect ratio of 15.6) and a density of 2.9 g/cm$^3$ (available as RRIMGLOS from Nyco)
(F3) Wollastonite fiber having a length of 50 $\mu$m and diameter of 3.3 $\mu$m (for an aspect ratio of 15.2) and a density of 2.9 g/cm$^3$ (available as Wollastokup G from Nyco)

Examples 1-10

Isocyanate-reactive components were prepared using 74.25 parts of a 6010 molecular weight trifunctional polyether polyol (glycerin starter and a PO:EO weight ratio of about 5:1), 17 parts of diethyltoluene diamine ("DETDA"), 7 parts of a zinc stearate concentrate consisting of 4 parts of a 400 molecular weight diamine (Jeffamine D-400, available from Texaco), 2 parts of zinc stearate, and 1 part of a 356 molecular weight tetrafunctional polyol (prepared from ethylene diamine and propylene oxide). Also added to the blend was 0.1 parts of triethylene diamine (commercially available as Dabco 33-LV from Air Products & Chemicals, Inc.), 0.05 parts of dibutyltin dilaurate (commercially available as Dabco T12 from Air Products & Chemicals, Inc.), 0.1 parts of dimethyltin dilaurate (commercially available as Witco UL-28 from Witco Corporation), and 0.5 parts of a polysiloxane surfactant available as Goldschmidt B-8418.

Polyol slurries were prepared as would normally be used in the molding of a urethane reinforced RIM product. To the above polyol blends were added charges of microspheres and fillers as indicated in Table 1, with appropriate adjustment in quantities of the isocyanate and isocyanate-reactive components to maintain an isocyanate index of 105 in all examples.

Because the density of the Z-Light Spheres is much greater than the density of the Dualite microspheres, a given weight of Z-Light Spheres will contain fewer microspheres than the same weight of Dualite microspheres. Therefore, although a smaller relative weight of Dualite microspheres was used for comparison Example 2, the actual number of microspheres would be approximately comparable to that of a composition containing about 5-6 wt.% of the indicated Z-Light Spheres.

Similarly, because the density of the Z-Light Spheres is much less than the density of wollastonite fibers, a given weight of Z-Light Spheres will contain more microspheres than the same weight of wollastonite. Therefore, although a greater relative weight of wollastonite was used for comparison Examples 1 and 2, the actual number of microspheres would be almost exactly comparable to that of compositions of Examples 6 to 9 containing about 4.4 wt.% of the Z-Light Spheres.

Each polyol slurry was charged to the polyol run tank of a Cincinnati Milacron CM-125 machine. The slurry was nucleated via a hollow-shaft high rpm nucleator based on the use of cavitation to introduce nitrogen at two different levels (which are reflected in the two densities of each final product shown in Table 2). Nucleation data for the isocyanate-reactive compositions are shown in Table 1.

Without the use of microspheres, a nucleation density level of not less than 0.68 $g/cm^3$ was attained. Comparison Dualite microspheres also provided a similarly high nucleation density of about 0.67 $g/cm^3$. In contrast, the polyol slurries containing microspheres according to the invention were able to attain a nucleation density level of 0.53 to 0.61 $g/cm^3$.

Table 1 Microsphere and filler contents for isocyanate-reactive components of Examples 1-10.

|  | Examples | | | | |
|---|---|---|---|---|---|
|  | 1 (comparison) | 2 (comparison) | 3 | 4 | 5 |
| Microspheres (wt.%) | | | | | |
| (M1) | - | - | 7 | - | - |
| (M2) | - | - | - | - | 7 |
| (M3) | - | - | - | 7 | - |
| (M4) | - | - | - | - | - |
| (MC) (comparison) | - | 1 | - | - | - |
| Fillers (wt.%) | | | | | |
| (F1) | - | - | 8 | 8 | 8 |
| (F2) | - | - | - | - | - |
| (F3) | 18 | 18 | - | - | - |
| Nucleation density (g/cm$^3$) | 0.68 | 0.67 | 0.58 | 0.61 | 0.57 |
| Time (min) to minimum nucleation density | > 60 | < 30 | < 30 | < 30 | < 30 |

Table 1 (continued)

| | Examples | | | | |
|---|---|---|---|---|---|
| | 6 | 7 | 8 | 9 | 10 |
| Microspheres (wt.%) | | | | | |
| (M1) | 4.4 | 4.4 | 4.4 | 4.4 | - |
| (M2) | - | - | - | - | - |
| (M3) | - | - | - | - | - |
| (M4) | - | - | - | - | 6 |
| (MC) (comparison) | - | - | - | - | - |
| Fillers (wt.%) | | | | | |
| (F1) | 5 | 8 | - | - | - |
| (F2) | - | - | 8 | - | 8 |
| (F3) | - | - | - | 8 | - |
| Nucleation density (g/cm$^3$) | 0.57 | 0.60 | 0.61 | 0.57 | 0.53 |
| Time (min) to minimum nucleation density | < 30 | < 30 | < 30 | < 30 | < 30 |

Each slurry was combined with a tripropylene glycol-modified polymethylene poly(phenyl isocyanate) having an NCO content of 22.8% by weight (available as Mondur PF from Miles Inc.) at an isocyanate index of 105. Urethane parts were molded on a Cincinnati Milacron CM-125 RIM machine. The mold was a steel mold (P-2 steel) having the dimensions 4.5 mm x 64 cm x 92 cm. The mold temperature was 68°C. The chemical temperatures were maintained at 43 to 46°C for the isocyanate and 52 to 57°C for the polyol slurry. The mixing pressures were 11.2 N/mm$^2$ for each component. Physical properties of the resultant urethane plaques are shown in Table 2.

All of the urethane plaques prepared in Examples 3-10 using microspheres according to the invention exhibited excellent quality and physical properties. In particular, Table 2 shows that the plaques of Examples 3-10 exhibited superior impact resistance, particularly at low temperatures. In addition, the

11

plaques of Examples 3-10 were found to exhibit superior mold release and green strength relative to comparison Example 1 (containing no microspheres) and Example 2 (containing Dualite microspheres).

Table 2  Physical properties for products prepared in Examples 1-10.

| | Examples | | | | | | | | | |
|---|---|---|---|---|---|---|---|---|---|---|
| | 1 (comparison) | 2 (comparison) | 3 | 4 | 5 | 6 | 7 | 8 | 9 | 10 |
| Elongation (%) | 142 | 134 | 104 | 120 | 193 | 159 | 109 | 108 | 158 | 108 |
| Tensile strength (MPa) | 15.2 | 11.1 | 14.0 | 11.0 | 12.7 | 11.2 | 13.5 | 12.4 | 14.6 | 1.7 |
| Tear strength (N/mm) | 81.5 | 59.2 | 75.4 | 55.1 | 57.1 | 50.7 | 62.8 | 55.0 | 76.1 | 58.8 |
| Flex modulus (MPa) | 483 | 345 | 472 | 330 | 327 | 284 | 375 | 310 | 486 | 363 |
| Heat sag (mm) | 36.5 | 32.7 | 24 | 30 | 25.5 | 19.5 | 19.2 | 20.2 | 16 | 20.5 |
| Density (g/cm$^3$) | 1.13 | 0.96 | 1.13 | 0.95 | 0.99 | 0.94 | 1.04 | 0.96 | 1.03 | 0.91 |
| Impact (Joules) | | | | | | | | | | |
| 23°C | 18.5 | 12.4 | 12.6 | 9.2 | 19.0 | 18.1 | 21.8 | 18.9 | 21.6 | 17.0 |
| -18°C | 6.3 | 6.3 | 4.8 | 3.3 | 9.7 | 10.6 | 12.9 | 13.6 | 5.3 | 6.1 |
| -30°C | 2.4 | 2.9 | 2.9 | 2.6 | 4.8 | 5.4 | 6.0 | 4.8 | 5.2 | 3.8 |

## Table 2 (continued)

| | Examples | | | | | | | | | |
|---|---|---|---|---|---|---|---|---|---|---|
| | 6 | | 7 | | 8 | | 9 | | 10 | |
| Elongation (%) | 180 | 157 | 120 | 133 | 108 | 101 | 123 | 153 | 174 | 170 |
| Tensile strength (MPa) | 15.5 | 13.7 | 13.8 | 12.1 | 17.6 | 15.4 | 14.2 | 12.1 | 13.1 | 12.6 |
| Tear strength (N/mm) | 68.3 | 61.6 | 67.1 | 57.8 | 76.7 | 64.5 | 69.8 | 52.0 | 60.4 | 57.7 |
| Flex modulus (MPa) | 364 | 311 | 393 | 326 | 443 | 379 | 404 | 315 | 373 | 353 |
| Heat sag (mm) | 18.5 | 21 | 13 | 18 | 15.5 | 22.7 | 17.2 | 25.5 | 22.5 | 26 |
| Density (g/cm$^3$) | 1.00 | 0.97 | 1.00 | 0.94 | 1.02 | 0.96 | 1.07 | 0.94 | 0.97 | 0.95 |
| Impact (Joules) | | | | | | | | | | |
| 23°C | 21.8 | 22.6 | 20.3 | 18.4 | 14.8 | 14.8 | 23.4 | 20.4 | 23.4 | 22.4 |
| -18°C | 12.1 | 16.2 | 8.7 | 10.6 | 2.7 | 3.3 | 16.6 | 13.2 | 13.6 | 13.1 |
| -30°C | 6.4 | 9.2 | 5.3 | 3.5 | 7.8 | 5.0 | 9.5 | 6.0 | 4.1 | 7.3 |

## Example 11

The method of Examples 1-10 was repeated using a different polyol blend. An isocyanate-reactive component was prepared mixing 74 parts of a 6000 molecular weight trifunctional polyether polyol (glycerin starter and a PO:EO weight ratio of about 5:1), 17 parts of DETDA, 7 parts of the same zinc stearate concentrate as in Example 1, 0.1 parts of Dabco 33-LV, 0.1 parts of Witco UL-28, and 0.5 parts of Goldschmidt B-8418. Slurries were again prepared using a wollastonite filler Wollastokup G and Z-Light W-1000 microspheres. To 100 parts of this polyol was added 14 parts of wollastonite filler and 7.7 parts of the

EP 0 639 614 A1

microspheres. Nucleation was carried out in the same manner as above to yield a slurry density of 0.67 to 0.60 g/cm$^3$ for the slurry containing the hollow microspheres. The same mixture could only be nucleated to a level of 0.67 g/cm$^3$ when the microspheres were not present.

This slurry was again reacted with the isocyanate used in Examples 1-10 at a ratio of 43.7 parts of isocyanate to 100 parts of the slurry under conditions identical to Examples 1-10 to produce plaques of urethane of excellent quality and properties.

Examples 12-17

The method of Examples 1-10 was repeated using a different polyol blend. An isocyanate-reactive component was prepared mixing 75.4 parts of a 4000 molecular weight difunctional polyether polyol (propylene glycol starter and a PO:EO weight ratio of about 4:1), 10.8 parts of DETDA, 5.4 parts of ethylene glycol, 7 parts of the same zinc stearate concentrate as in Example 1, 0.1 parts of Dabco 33-LV, 0.1 parts of a dimethyltin dimercaptide commercially available as Witco UL-22, and 0.5 parts of Goldschmidt B-8418. Slurries were again prepared using Z-Light W-1000 microspheres. To 100 parts of this polyol was added 14 parts of wollastonite filler and 7.7 parts of the microspheres.

Polyol slurries were prepared as would normally be used in the molding of a urethane reinforced RIM product. To the above polyol blends were added charges of microspheres and fillers as indicated in Table 3, with appropriate adjustment in quantities of the isocyanate and isocyanate-reactive components to maintain an isocyanate index of 105 in all examples.

Each polyol slurry was charged to the polyol run tank of a Hennecke/Bayer LK-06 mini-RIM machine. The slurry was nucleated as described in Example 1-10 except that nitrogen was introduced at only one levels.

Table 3

| Microsphere and filler contents for isocyanate-reactive components of Examples 12-17. | | | | | | |
|---|---|---|---|---|---|---|
| | Examples | | | | | |
| | 12 | 13 | 14 | 15 | 16 | 17 |
| Microspheres (wt.%) | | | | | | |
| (M1) | - | - | - | 4.34 | 7 | 10 |
| (MC) (comparison) | - | - | 2 | - | - | - |
| Fillers (wt.%) | | | | | | |
| (F3) | - | 18 | 18 | - | - | - |

Each polyol slurry was combined at an isocyanate index of 105 with an isocyanate prepolymer having an NCO content of 26.9% by weight prepared by reaction of 85% by weight of a polyisocyanate mixture containing 58% by weight of monomeric MDI and 42% by weight oligomeric MDI and having an NCO content of 32.3% (available from Miles Inc.) with 15% by weight of a 4000 molecular weight difunctional polyether polyol (propylene glycol starter and a PO:EO weight ratio of about 4:1; available from Miles Inc.). Urethane parts were molded on the miniRIM machine described above using a steel mold (P-2 steel) having the dimensions 3 mm x 20.3 cm x 30.5 cm. The mold temperature was 68°C. The chemical temperatures were maintained at 43 to 46°C for the isocyanate and 52 to 57°C for the polyol slurry. The mixing pressures were 20 N/mm$^2$ for each component. Physical properties of the resultant urethane plaques are shown in Table 4.

All of the urethane plaques prepared in Examples 15-17 using microspheres according to the invention exhibited excellent quality and physical properties. In particular, Table 4 shows that the plaques of Examples 15-17 exhibited superior impact resistance, particularly at low temperatures, relative to the filled plaques of comparison Examples 13 and 14. In addition, the plaques of Examples 15-17 were found to exhibit superior mold release and green strength relative to comparison Example 13 (containing wollastonite but no microspheres), and comparison Example 14 (containing wollastonite and Dualite microspheres).

14

Table 4

| Physical properties for products prepared in Examples 12-17. | | | | | | |
|---|---|---|---|---|---|---|
| | Examples | | | | | |
| | 12 | 13 | 14 | 15 | 16 | 17 |
| Elongation (%) | 79.3 | 42 | 38 | 78.1 | 70.8 | 67.6 |
| Tensile strength (MPa) | 15.2 | 15.9 | 13.4 | 13.3 | 12.0 | 10.9 |
| Tear strength (N/mm) | 36.2 | 53.4 | 41.8 | 35.9 | 30.8 | 33.3 |
| Flex modulus (MPa) | 164 | 346 | 276 | 171 | 183 | 194 |
| Heat sag (mm) | 39.5 | 11 | 12 | 32.8 | 33.3 | 33.3 |
| Density (g/cm$^3$) | 1.01 | 1.17 | 1.00 | 1.00 | 0.98 | 0.98 |
| Impact (Joules) | | | | | | |
| 23°C | 24.9 | 9.1 | 3.4 | 14.1 | 11.6 | 8.0 |
| -18°C | 25.8 | 3.0 | 2.3 | 9.8 | 7.1 | 4.6 |
| -30°C | 27.5 | 1.6 | 1.9 | 4.4 | 2.6 | 1.9 |

**Claims**

1. A reaction injection molding process for preparing a molded product comprising reacting a mixture of
   (a) an organic polyisocyanate;
   (b) one or more compounds containing at least two isocyanate-reactive groups; and
   (c) about 0.5 to about 40% by weight, based on the weight of the molded product, of rigid microspheres.

2. A process according to Claim 1 wherein said mixture additionally comprises
   (d) an inert gas dissolved in at least one of components (a) or (b) in an amount sufficient to produce a molded product having a density that is at least 1% less than the density of an analogous molded product without an inert gas but which is at least 0.75 g/cm$^3$; and
   (e) up to 45% by weight, based on the weight of the molded product, of a reinforcing filler other than a rigid microsphere added to at least one of components (a) or (b).

3. A process according to Claim 1 wherein the rigid inorganic microspheres are present in an amount of from 2 to 10% by weight, based upon the amount of component (b).

4. A process according to Claim 2 wherein the inert gas is air and/or nitrogen gas.

5. A process according to Claim 2 wherein the inert gas is dissolved in component (b) in an amount sufficient to produce a molded product having a density of 0.85 to 1.1 g/cm$^3$.

6. A process according to Claim 2 wherein the reinforcing filler (e) is used in an amount of from 15 to 40% by weight based upon the weight of the molded product.

7. A process according to Claim 1 wherein said mixture additionally comprises
   (f) a mold release agent.

8. A process according to Claim 7 wherein the mold release agent contains zinc stearate.

9. A molded product prepared by the process of claims 1 - 8.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 296 052 (ALSTHOM)<br>* page 2, line 17 - page 3, line 19 *<br>* page 3, line 30 - line 31; claims 1,7-9 * | 1 | C08K7/24<br>C08J9/32 |
| P,X | US-A-5 260 343 (HARRISON ET AL)<br>* column 2, line 17 - column 7, line 33; claims 1-4 * | 1 | |
| P,X | US-A-5 244 613 (HURLEY ET AL)<br>* the whole document * | 1 | |
| A | EP-A-0 390 147 (B.F. GOODRICH)<br>* page 2, line 26 - page 5, line 5; claims * | 1 | |
| A | US-A-4 839 394 (CHAMPION)<br>* column 2, line 20 - column 4, line 46; claims * | 1 | |
| A | GB-A-1 200 063 (MINNESOTA MINING AND MANUFACTURING)<br>* page 1, line 39 - line 71 *<br>* page 3, line 19 - line 45; claim 1 * | 1 | TECHNICAL FIELDS SEARCHED (Int.Cl.6)<br><br>C08K<br>C08J |

The present search report has been drawn up for all claims

| Place of search | Date of completion of the search | Examiner |
|---|---|---|
| THE HAGUE | 15 November 1994 | Bourgonje, A |

EPO FORM 1503 03.82 (P04C01)